# FASCICULE DE BREVET EUROPEEN

(11) **EP 2 795 714 B1**
(45) Date de publication et mention de la délivrance du brevet: **06.09.2017**
(21) Numéro de dépôt: 12810397.5
(22) Date de dépôt: 18.12.2012
(51) Int. Cl.: H01M 10/615, H01M 10/625, H01M 10/633, H01M 10/667, H01M 10/6568, H01M 10/66, H01M 10/613, H01M 10/659, H01M 10/656

(54) **DISPOSITIF DE STOCKAGE DE CHALEUR POUR RECHAUFFER UNE BATTERIE DE VEHICULE**
WÄRMESPEICHERNDE VORRICHTUNG ZUM ERWÄRMEN EINER FAHRZEUGBATTERIE
HEAT-STORAGE DEVICE FOR HEATING A VEHICLE BATTERY

(30) Priorité: 20.12.2011 FR 1161975
(43) Date de publication de la demande: 29.10.2014
(73) Titulaire: Renault s.a.s., 92100 Boulogne-Billancourt (FR)
(72) Inventeur: BALMY, Richard, F-92320 Chatillon (FR); NICOULEAU-BOURLES, Eric, F-92500 Rueil Malmaison (FR)
(86) Numéro de dépôt international: PCT/FR2012/052963
(87) Numéro de publication internationale: WO 2013/093319

(56) Documents cités:
- WO-A1-2011/084728
- DE-A1-102009 000 392
- JP-A- 2004 247 096

## Description

La présente invention concerne un dispositif de stockage de chaleur pour réchauffer une batterie d'un véhicule, notamment un véhicule électrique, du type hybride ou tout électrique, en particulier lors du démarrage du véhicule.

L'invention concerne également un circuit de chauffage/refroidissement d'une batterie comprenant un tel dispositif de stockage de chaleur, un véhicule ainsi équipé et un procédé de chauffage d'une batterie utilisant ce dispositif.

L'autonomie des véhicules électriques dépend, entre autres, du niveau de température de la ou des batteries.

Les batteries utilisées fonctionnent généralement de manière optimale dans une gamme de température qui dépend du type de batterie. Dans cette gamme de température, la puissance fournie par la batterie et la capacité de récupération de la batterie sont plus importantes. De plus, l'énergie que la batterie est capable de restituer dépend de sa température : plus la température de la batterie est faible, plus sa capacité, autrement dit l'énergie restituable, est faible.

Ainsi, pour des températures d'air extérieur basses, il est important de pouvoir démarrer le véhicule avec une température de batterie élevée, ou d'atteindre le plus rapidement possible une température élevée, de façon à bénéficier instantanément de la pleine puissance disponible et des meilleures capacités de récupération électrique.

Généralement, la température de la ou des batteries est ainsi régulée au moyen d'un dispositif de chauffage/refroidissement. Il s'agit par exemple d'un circuit dans lequel un fluide est mis en circulation au moyen d'une pompe et comportant un échangeur de chaleur pour refroidir ou réchauffer la batterie.

Lorsqu'il s'agit de réchauffer la ou les batteries, les solutions existantes comprennent l'utilisation de résistances électriques, implantées soit à l'intérieur ou à la surface de la batterie, tel que décrit dans le document FR 2 787 242 A1, soit plongées dans le fluide circulant dans un circuit au travers de la batterie, ce circuit servant par exemple au refroidissement de la batterie lorsque le véhicule roule. Toutefois, de telles résistances électriques sont alimentées par la batterie, de sorte qu'elles sont susceptibles de la décharger en partie. Il est possible de prévoir le fonctionnement de ces résistances électriques uniquement pendant les périodes de charge de la batterie afin de réduire leur impact sur le niveau de charge de la batterie. Toutefois, la chaleur produite peut s'être dissipée entre la fin de la charge de la batterie et le démarrage du véhicule.

D'autres solutions consistent à récupérer de la chaleur perdue afin de chauffer la batterie. Ainsi, le document US 2008/0292945 A1 décrit un circuit comportant un échangeur utilisé pour chauffer une batterie en récupérant la chaleur générée par les gaz d'échappement ou par le freinage dynamique du véhicule. Si ces systèmes utilisent une autre source d'énergie que la batterie, ils ne permettent cependant pas un chauffage de la batterie lors de la phase de démarrage du véhicule, alors que les gaz d'échappement ne sont pas suffisamment chauds et que le véhicule ne roule pas encore.

La demande WO2011/084728 divulgue un procédé et un dispositif de gestion thermique d'une cellule électrochimique par combinaison d'un fluide de transfert de la chaleur avec un matériau à changement de phase.

Il existe donc un besoin pour réaliser un dispositif de chauffage d'une batterie qui n'utilise pas l'énergie de la batterie et qui puisse être utilisé à l'arrêt du véhicule.

L'objet de l'invention concerne ainsi un dispositif de stockage de chaleur, décrit dans la revendication 1, pour réchauffer une batterie d'un véhicule automobile à moteur électrique ou hybride, caractérisé en ce qu'il comprend :
- une conduite de circulation d'un fluide,
- un premier moyen de raccordement de la conduite à la batterie, notamment à une entrée de la batterie,
- un deuxième moyen de raccordement de la conduite destiné à raccorder la conduite à la batterie, notamment à une sortie de la batterie, ou à un circuit de refroidissement d'un élément du véhicule émettant de la chaleur lors du roulage du véhicule et/ou du fonctionnement du moteur,
- un bocal isotherme raccordé à la conduite de manière à être rempli par le fluide circulant dans la conduite puis à évacuer le fluide contenu dans ledit bocal isotherme vers l'intérieur de la batterie via le premier moyen de raccordement.

Il est ainsi possible de stocker un fluide chaud dans le bocal isotherme, par exemple lors de l'arrêt du moteur et/ou du véhicule, et ensuite de renvoyer vers l'intérieur de la batterie le fluide chaud contenu dans le bocal isotherme. Ce dispositif de stockage conserve ainsi la chaleur emmagasinée dans un fluide en circulation dans la conduite lors de l'arrêt du véhicule pour réchauffer la batterie. Ce dispositif ne nécessite donc pas l'utilisation de l'énergie de la batterie pour chauffer la batterie, en particulier lors de la mise en route du moteur et/ou du véhicule. Il ne nécessite pas non plus le fonctionnement d'un organe du véhicule ou le roulage du véhicule pour chauffer la batterie.

Le fluide utilisé pour remplir le bocal isotherme provient d'un circuit de refroidissement d'un élément du véhicule émettant de la chaleur lors du fonctionnement du véhicule. Cet élément peut être la batterie elle-même ou un autre élément du véhicule, par exemple l'électronique de puissance du véhicule.

Les premier et deuxième moyens de raccordement peuvent être de simples raccords étanches pour brancher la conduite sur la batterie ou sur une autre conduite d'un circuit, ou peuvent être des vannes, par exemple des électrovannes.

Plus précisément, le fluide de refroidissement circulant à l'intérieur de la batterie entre l'entrée et la sortie de la batterie, le premier moyen de raccordement est raccordé à l'entrée de la batterie, le deuxième moyen de raccordement pouvant être raccordé à la sortie de la batterie.

Dans un mode de réalisation non limitatif, le bocal isotherme est monté en série sur la conduite. Dans ce cas, le fluide circulant dans la conduite circule de façon permanente dans le bocal.

Dans un autre mode de réalisation non limitatif, le bocal isotherme est monté sur une ligne de dérivation de la conduite et au moins un moyen d'isolement est agencé pour isoler le bocal isotherme de la conduite. Dans ce cas, le bocal isotherme est monté en parallèle sur la conduite. Le moyen d'isolement permet soit de bloquer la circulation du fluide dans la ligne de dérivation et le bocal isotherme, par exemple lors du fonctionnement du moteur et/ou du roulage du véhicule, soit d'autoriser la circulation du fluide dans la ligne de dérivation et donc le remplissage du bocal isotherme, par exemple lors de la mise en route du moteur et/ou du véhicule. Ce moyen d'isolement peut être une vanne, par exemple une électrovanne.

Le bocal isotherme, monté en série ou en parallèle, pourra également être équipé de moyens d'isolement, tels que des vannes ou électrovannes, afin de le maintenir fermé ou ouvert, la fermeture du bocal isotherme permettant une meilleure conservation de la chaleur du fluide qu'il contient. Ces moyens d'isolement peuvent être ceux autorisant ou non la circulation du fluide dans la conduite de dérivation quand le bocal isotherme est monté en parallèle.

Avantageusement et de manière non limitative, le dispositif de stockage peut comprendre une pompe pour la circulation du fluide à l'intérieur de la conduite.

Avantageusement et de manière non limitative, le dispositif de stockage peut comprendre un moyen de commande de la pompe et/ou des moyens de raccordement et/ou des moyens d'isolement. Un tel moyen de commande peut être relié à l'ordinateur de bord du véhicule afin de commander les différents moyens de raccordement et/ou d'isolement pour le remplissage ou la vidange du bocal isotherme.

Les moyens de raccordement et/ou des moyens d'isolement décrits sont par exemple des vannes, de préférence des électrovannes reliées au moyen de commande.

Dans un mode de réalisation particulier, la conduite peut faire partie d'un circuit de refroidissement de la batterie, lequel peut comprendre au moins un dispositif de refroidissement, par exemple un échangeur de chaleur, pour refroidir le fluide chaud sortant de la batterie et une pompe pour la circulation du fluide. Le bocal isotherme peut alors être rempli du fluide circulant dans le circuit, ce fluide ayant été réchauffé suite à son passage dans la batterie. Il est éventuellement possible de prévoir que le dispositif de refroidissement de chaleur ne fonctionne pas lors du remplissage du bocal isotherme pour éviter le refroidissement du fluide avant son entrée dans le bocal isotherme, ou bien le bocal isotherme peut être disposé entre la sortie du fluide de la batterie et l'échangeur de chaleur.

Un tel circuit de refroidissement peut également comprendre un ou plusieurs thermoplongeurs disposés sur le circuit de manière à chauffer le fluide circulant dans le circuit. Ces thermoplongeurs sont alimentés par la batterie et seront donc de préférence utilisés lors des périodes de charge de la batterie.

Un autre objet de l'invention est donc un circuit de chauffage/refroidissement d'une batterie, ce circuit comprenant une entrée et une sortie aptes à être raccordées à une sortie et à une entrée respectivement de la batterie, au moins une pompe et au moins un dispositif de refroidissement, par exemple un échangeur de chaleur, et un dispositif de stockage selon l'invention, le deuxième moyen de raccordement de la conduite dudit dispositif de stockage formant l'entrée dudit circuit et le premier moyen de raccordement de la conduite dudit dispositif de stockage formant la sortie dudit circuit.

Le bocal isotherme peut ainsi être rempli par le fluide chaud issu de la batterie et évacuer le fluide contenu dans ledit bocal vers l'intérieur de la batterie.

Ce circuit de chauffage/refroidissement peut également comprendre des moyens de raccordement à un circuit de refroidissement d'un autre élément du véhicule émettant de la chaleur lors du roulage du véhicule et/ou du fonctionnement du moteur. En particulier, ces moyens de raccordement peuvent être raccordés à une partie de cet autre circuit de refroidissement située en aval de l'autre élément du véhicule, par rapport au sens de circulation du fluide.

L'invention concerne également une batterie équipée d'un tel circuit de chauffage/refroidissement.

Un autre objet de l'invention est un véhicule automobile comprenant au moins une batterie et un dispositif de stockage selon l'invention dont le premier moyen de raccordement est relié à la batterie, notamment à l'entrée de la batterie.

Avantageusement et de manière non limitative, le véhicule peut comprendre un circuit de refroidissement d'un élément du véhicule, par exemple la batterie ou un autre élément du véhicule, dans lequel le deuxième moyen de raccordement du dispositif de stockage est relié à une portion dudit circuit de refroidissement située en aval dudit élément de véhicule par rapport à la circulation du fluide dans le circuit et dans laquelle circule par conséquent du fluide chauffé du fait du fonctionnement dudit élément du véhicule lors du roulage du véhicule et/ou du fonctionnement du moteur.

Un autre objet de l'invention est un procédé de chauffage d'une batterie d'un véhicule à moteur électrique ou hybride au moyen d'un dispositif de stockage selon l'invention, ce procédé comprenant :
- lors de l'arrêt du moteur et/ou du véhicule, le remplissage du bocal isotherme par un fluide chaud issu de la batterie ou d'un circuit de refroidissement d'un élément du véhicule émettant de la chaleur pendant le roulage du véhicule et/ou le fonctionnement du moteur,
- à l'arrêt ou au démarrage du moteur et/ou du véhicule, la vidange du fluide chaud contenu dans le bocal isotherme vers l'intérieur de la batterie.

Avantageusement et de manière non limitative, les étapes de remplissage et de vidange sont commandées par un dispositif de commande en réponse à un signal représentatif de l'arrêt du moteur et/ou du véhicule pour l'étape de remplissage et en réponse à un signal représentatif de la mise en fonctionnement du moteur et/ou du roulage du véhicule pour l'étape de vidange.

Le remplissage du bocal isotherme pourra aussi se faire au démarrage du refroidissement de la batterie.

En outre, si, à l'arrêt du véhicule (ou en réponse à tout autre signal représentatif de l'arrêt du véhicule), la température du fluide contenu dans le bocal isotherme est supérieure à la température du fluide circulant dans le circuit de chauffage/refroidissement, on peut prévoir de conserver le fluide contenu dans le bocal. Dans le cas contraire, on vidange ce fluide au profit de celui contenu dans le circuit de chauffage/ refroidissement.

Le dispositif de commande peut être intégré dans un processeur, par exemple un microcontrôleur. Il peut comprendre des moyens d'acquisition des données représentatives de l'arrêt du moteur et/ou du véhicule. Il peut s'agir d'un processeur programmé pour commander les étapes.

Les signaux représentatifs de l'arrêt du moteur et/ou du véhicule ou du fonctionnement du moteur et/ou du roulage du véhicule pourront être choisis parmi des indicateurs de fonctionnement du moteur, des indicateurs de fermeture/ouverture de porte, des indicateurs de mise sous contact/arrêt du véhicule, ou tout autre indicateur adapté.

L'invention est maintenant décrite en référence aux dessins annexés, non limitatifs, dans lesquels :
- la figure 1 est une représentation schématique d'une batterie et d'un circuit de refroidissement de la batterie comprenant un dispositif de stockage selon un premier mode de réalisation de l'invention ;
- la figure 2 est une représentation schématique d'une batterie et d'un circuit de refroidissement de la batterie comprenant un dispositif de stockage selon un deuxième mode de réalisation de l'invention ;
- la figure 3 est une représentation schématique d'une batterie, d'un circuit de refroidissement de la batterie comprenant un dispositif de stockage selon l'invention et d'un circuit de refroidissement d'un autre élément du véhicule.

Les termes aval/amont se réfèrent au sens de circulation du fluide dans les circuits décrits.

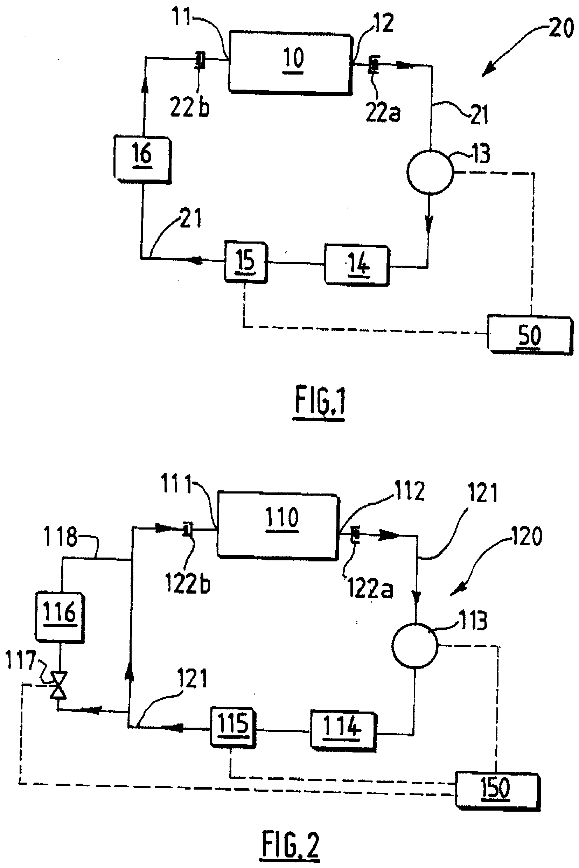

La figure 1 représente une batterie 10 et son circuit de refroidissement 20. Les flèches indiquent le sens de circulation du fluide dans le circuit de refroidissement 20.

La batterie 10 est une batterie classique, par exemple composée de plusieurs cellules électriques reliées les unes aux autres et entre lesquelles peut circuler le fluide de refroidissement provenant du circuit de refroidissement. La batterie 10 comprend ainsi une entrée 11 et une sortie 12 pour le fluide circulant entre les cellules à l'intérieur de la batterie 10.

Le circuit de refroidissement 20 comprend une conduite 21 connectée à la sortie 12 de la batterie via un moyen de raccordement 22a à la batterie, formant un deuxième moyen de raccordement au sens de l'invention dans le présent exemple. Cette conduite 21 comprend une pompe 13 assurant la circulation du fluide dans le circuit de refroidissement 20 et un dispositif de refroidissement 14, par exemple un échangeur de chaleur.

La conduite 21 relie le dispositif de refroidissement 14 à l'entrée 11 de la batterie via un moyen de raccordement 22b à la batterie, formant un premier moyen de raccordement au sens de l'invention dans le présent exemple.

Dans l'exemple représenté sur la figure 1, les moyens de raccordement 22a et 22b à la batterie sont des raccords étanches.

Le circuit de refroidissement 20 peut comprendre en outre au moins un thermoplongeur 15 alimenté par la batterie 10 et disposé sur la conduite 21 pour chauffer le fluide circulant dans la conduite 21. Ce thermoplongeur 15 est situé en aval du dispositif de refroidissement 14 dans l'exemple représenté, mais il pourrait être disposé à tout autre endroit du circuit de refroidissement 20.

Le circuit de refroidissement 20 comprend un bocal isotherme 16 disposé sur la conduite 21, en amont de l'entrée 11 de la batterie 10 et du moyen de raccordement 22b.

Le bocal isotherme 16 est monté en série sur la conduite 21 de sorte que le fluide circulant dans la conduite 21 circule de façon permanente dans le bocal isotherme 16.

Lors de l'arrêt du moteur et/ou du véhicule, le bocal isotherme 16 est ainsi rempli de fluide chaud sortant de la batterie 10. Eventuellement, on peut prévoir de faire fonctionner la pompe 13 après l'arrêt du dispositif de refroidissement 14 afin que le bocal isotherme 16 soit rempli du fluide chaud sortant de la batterie 10 n'ayant pas été refroidi par le dispositif de refroidissement 14. Si le bocal isotherme 16 est équipé de moyens d'isolement (non représentés sur la figure, par exemples des vannes ou électrovannes) au niveau de son entrée et de sa sortie, ces moyens d'isolement peuvent être fermés après le remplissage pour limiter les pertes de chaleur et rouverts à la vidange du bocal isotherme.

Lors du démarrage du moteur et/ou véhicule, la pompe 13 est actionnée provoquant la vidange du bocal isotherme 16 (suite à l'ouverture de ses moyens d'isolement le cas échéant) vers l'intérieur de la batterie 10 via son entrée 11, et assurant ainsi le réchauffage de la batterie.

La pompe 13 peut être reliée à un moyen de commande 50 lequel reçoit des signaux représentatifs de l'arrêt du moteur et/ou du véhicule et des signaux représentatifs du démarrage du moteur et/ou du véhicule.

Le circuit de refroidissement 20 décrit ci-dessus forme un circuit de réchauffage/refroidissement d'une batterie au sens de l'invention.

Le mode de réalisation de la figure 2 ne diffère de celui de la figure 1 que par la manière dont le bocal isotherme est raccordé au circuit de refroidissement de la batterie : les éléments identiques portent les mêmes références que celles de la figure 1 précédées du chiffre « 1 ».

La batterie 110 comprend ainsi une entrée 111 et une sortie 112.

Le circuit de refroidissement 120 comprend une conduite 121 connectée à la sortie 112 de la batterie 110 via un moyen de raccordement 122a à la batterie 110 (un raccord étanche sur la figure), formant un deuxième moyen de raccordement au sens de l'invention dans le présent exemple. Cette conduite 121 comprend une pompe 113 assurant la circulation du fluide dans le circuit de refroidissement 120 et un dispositif de refroidissement 114, par exemple un échangeur de chaleur.

La conduite 121 relie le dispositif de refroidissement 114 à l'entrée 111 de la batterie 110 via un moyen de raccordement 122b à la batterie (un raccord étanche sur la figure), formant un premier moyen de raccordement au sens de l'invention dans le présent exemple.

Le circuit de refroidissement 120 peut comprendre en outre au moins un thermoplongeur 115 alimenté par la batterie et disposé sur la conduite 121 en aval du dispositif de refroidissement 14 pour chauffer le fluide circulant dans la conduite 121. De même que dans l'exemple précédent, le thermoplongeur 15 peut être disposé à tout autre endroit de la conduite 121.

Un bocal isotherme 116 est monté sur une ligne de dérivation 118 de la conduite 121 et un moyen d'isolement 117 est agencé pour isoler le bocal isotherme 116 de la conduite 121. Dans l'exemple, ce moyen d'isolement 117 est monté sur la ligne de dérivation 118 en amont du bocal isotherme 116. Il pourrait toutefois être situé en aval du bocal isotherme 116 ou à l'une des intersections de la ligne de dérivation 118 et de la conduite 121. Le bocal isotherme 116 est ainsi monté en parallèle sur la conduite 121.

Lorsque le véhicule roule et que la batterie 110 doit être refroidie, le moyen d'isolement 117 est fermé et le fluide ne peut circuler au travers de la ligne de dérivation 118.

Lors de l'arrêt du moteur et/ou du véhicule, le moyen d'isolement 117 est ouvert pour permettre la circulation du fluide via la ligne de dérivation 118 grâce à la pompe 113. Le bocal isotherme 116 est alors rempli avec le fluide chaud sortant de la batterie 110. Eventuellement, on peut prévoir de faire fonctionner la pompe 113 après l'arrêt du dispositif de refroidissement 114 afin que le bocal isotherme 116 soit rempli du fluide chaud sortant de la batterie et n'ayant pas été refroidi par le dispositif de refroidissement 114.

Lors du démarrage du moteur et/ou véhicule, la pompe 113 est actionnée et le moyen d'isolement 117 est ouvert provoquant la vidange du bocal isotherme 116 dans la batterie 110 via son entrée 111, et assurant ainsi le réchauffage de la batterie 110.

La pompe 113 et le moyen d'isolement 117 peuvent être reliés à un moyen de commande 150 lequel reçoit des signaux représentatifs de l'arrêt du moteur et/ou du véhicule et des signaux représentatifs du démarrage du moteur et/ou du véhicule.

Le circuit de refroidissement 120 décrit ci-dessus forme un circuit de réchauffage/refroidissement d'une batterie au sens de l'invention.

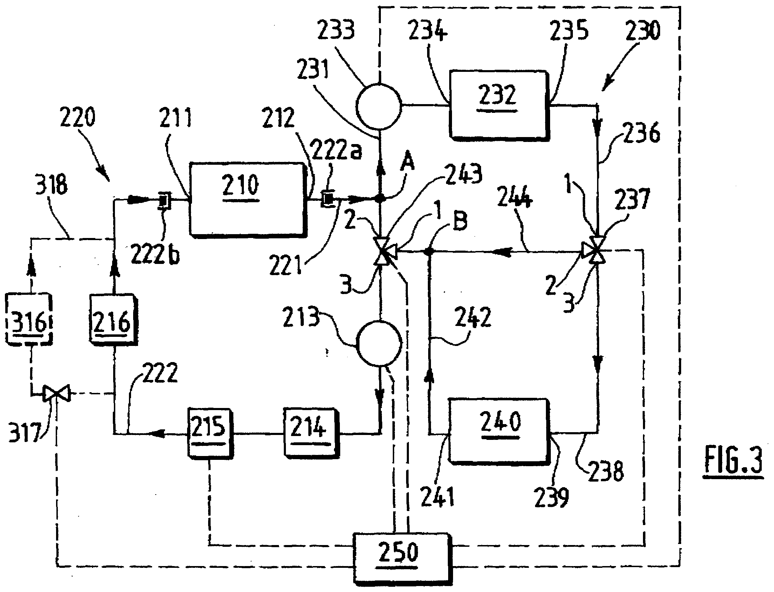

La figure 3 représente une batterie 210 et son circuit de refroidissement 220. Les éléments identiques de ceux représentés figure 1 portent les mêmes références que celles de la figure 1 précédées du chiffre « 2 »

La batterie 210 est une batterie classique, telle que déjà décrite, et comprend une entrée 211 et une sortie 212 pour le fluide circulant à l'intérieur de la batterie.

Le circuit de refroidissement 220 comprend une conduite 221 connectée d'une part à la sortie 212 de la batterie 210 via un moyen de raccordement 222a à la batterie (un raccord étanche sur la figure), et d'autre part en un point A à une conduite 231 d'un circuit de refroidissement 230 d'un autre élément 232 du véhicule, par exemple l'électronique de puissance.

La conduite 231 comprend une pompe 233 assurant la circulation du fluide dans le circuit de refroidissement 230. Cette conduite 231 est raccordée à l'entrée 234 de l'élément 232 à refroidir. La sortie 235 de l'élément 232 est raccordée via une conduite 236 à un moyen de raccordement 237, ici une électrovanne à trois voies 1, 2, 3.

Une conduite 238 relie le moyen de raccordement 237 à l'entrée 239 d'un dispositif de refroidissement 240, par exemple un radiateur.

La sortie 241 du dispositif de refroidissement 240 est reliée via une conduite 242 à un moyen de raccordement 243 du circuit de refroidissement 230 avec le circuit de refroidissement 220 de la batterie 210.

Sur cette conduite 242, entre le dispositif de refroidissement 240 et le moyen de raccordement 243, est raccordée en un point B une conduite 244 reliée au moyen de raccordement 237.

Le moyen de raccordement 243, également une électrovanne à trois voies 1, 2, 3 dans l'exemple, est relié d'une part à la conduite 231 du circuit de refroidissement 230 et d'autre part à une conduite 222 faisant partie du circuit de refroidissement 220 de la batterie 210. Ce moyen de raccordement 243 forme un deuxième moyen de raccordement au sens de l'invention dans le présent exemple.

Cette conduite 222 comprend une pompe 213 assurant la circulation du fluide dans le circuit de refroidissement 220 et un dispositif de refroidissement 214, par exemple un échangeur de chaleur.

La conduite 222 relie le dispositif de refroidissement 214 à l'entrée 211 de la batterie 210 via un moyen de raccordement 222b à la batterie (un raccord étanche sur la figure), formant un premier moyen de raccordement au sens de l'invention dans le présent exemple.

Le circuit de refroidissement 220 est ainsi formé des conduites 221 et 222 dans l'exemple de la figure 3.

Ce circuit de refroidissement 220 peut comprendre en outre au moins un thermoplongeur 215 alimenté par la batterie et disposé sur la conduite 222, en aval du dispositif de refroidissement 214 tel que représenté, ou en un autre point du circuit de refroidissement 220, pour chauffer le fluide circulant dans la conduite 222.

Le circuit de refroidissement 220 comprend un bocal isotherme 216 disposé sur la conduite 222, en amont de l'entrée 211 de la batterie 210.

Le bocal isotherme 216 est monté en série sur la conduite 222 de sorte que le fluide circulant dans la conduite 222 circule de façon permanente dans le bocal isotherme 216 lorsque le véhicule roule et/ou le moteur fonctionne. Lors de l'arrêt du moteur et/ou du véhicule, le bocal isotherme 216 est ainsi rempli de fluide chaud sortant de la batterie 210.

Les circuits de refroidissement 220 et 230 décrits ci-dessus forment un circuit de réchauffage/refroidissement d'une batterie au sens de l'invention.

Le fonctionnement de ces circuits est maintenant décrit en définissant de la manière suivante les voies des moyens de raccordement 237 et 243 :
Moyen de raccordement 237 :
   - Voie 1 :: conduite 236
   - Voie 2 :: conduite 244
   - Voie 3 :: conduite 238
Moyen de raccordement 243 :
   - Voie 1 :: reliée au point B
   - Voie 2 :: reliée au point A
   - Voie 3 :: conduite 222.

A noter qu'une vanne pourra éventuellement être prévue à l'emplacement du point A afin de permettre un fonctionnement en boucle fermée du circuit de refroidissement 220.

Lorsque le moteur fonctionne, le fluide chauffé par la batterie 210 sort de la batterie 210 via la conduite 221. L'électrovanne 243 est commandée de manière à fermer sa voie 2. Ainsi, le fluide sortant de la batterie 210 est dirigé vers l'élément 232 via la conduite 231. Le fluide sortant de l'élément 232 est acheminé via la conduite 236 et la conduite 238 au dispositif de refroidissement 240, la voie 2 du moyen de raccordement 237 étant fermée. Le fluide refroidi dans le dispositif de refroidissement 240 sort de ce dernier via la conduite 242 et entre dans la conduite 222 du circuit de refroidissement 220 de la batterie en passant par les voies 1 et 3 ouvertes du moyen de raccordement 243. Ce fluide est ensuite acheminé jusqu'à la batterie via la conduite 222, dans laquelle il est davantage refroidi par son passage au travers du dispositif de refroidissement 214.

Lorsque l'on vient d'arrêter le moteur et/ou lorsque le véhicule est à l'arrêt, le moyen de raccordement 243 et la pompe 213 peuvent être commandés de sorte que le fluide chaud sortant de la batterie 210 soit acheminé directement vers la conduite 222 et le bocal isotherme 216, sans parcourir le circuit de refroidissement 230. A cet effet, seules les voies 2 et 3 du moyen de raccordement 243 sont ouvertes, et la pompe 233 ne fonctionne pas.

Eventuellement, on peut prévoir de faire fonctionner la pompe 213 après l'arrêt du dispositif de refroidissement 214 afin que le bocal isotherme 216 soit rempli du fluide chaud sortant de la batterie 210 et n'ayant pas été refroidi par le dispositif de refroidissement 214.

Au redémarrage du moteur et/ou du véhicule, la pompe 213 est activée afin de vider le bocal isotherme 216 à l'intérieur de la batterie 210. La voie 3 du moyen de raccordement 243 peut éventuellement être fermée.

En variante, on peut prévoir de remplir le bocal isotherme 216 avec le fluide sortant de l'élément 232 par une commande adéquate des moyens de raccordement 243 et 237, sans traverser le dispositif de refroidissement 240, éventuellement après l'arrêt du dispositif de refroidissement 214. A cet effet, la voie 2 du moyen de raccordement 243 peut être fermée, de même que la voie 3 du moyen de raccordement 237, les autres voies des moyens de raccordement 243 et 237 étant ouvertes.

La pompe 213, la pompe 233 et les moyens de raccordement 235 et 240 peuvent être reliés à un moyen de commande 250 lequel reçoit des signaux représentatifs de l'arrêt du moteur et/ou du véhicule et des signaux représentatifs du démarrage du moteur et/ou du véhicule.

La figure 3 représente en traits pointillés un mode de réalisation alternatif dans lequel le bocal isotherme 316 est monté sur une ligne de dérivation 318 de la conduite 222 (dans ce cas, il n'y a pas de bocal isotherme 216). Ce mode de réalisation correspond à une configuration du circuit de refroidissement/réchauffage de la batterie identique à celle décrite en référence à la figure 2. Un moyen d'isolement 317 est agencé pour isoler le bocal isotherme 316 de la conduite 222. Dans cette variante, ce moyen d'isolement 317 est monté sur la ligne de dérivation 222 en amont du bocal isotherme 316. Le bocal isotherme 316 est ainsi monté en parallèle sur la conduite 222.

Lors du fonctionnement du moteur, le moyen d'isolement 317 est fermé isolant le bocal isotherme 316 du reste du circuit.

Lors de l'arrêt du véhicule, le moyen d'isolement 317 est ouvert, et la pompe 213 actionnée. L'ouverture des seules voies 2 et 3 du moyen de raccordement 243 permet de remplir le bocal isotherme 316 avec le fluide chaud sortant de la batterie 210, ceci de préférence alors que le dispositif de refroidissement 214 ne fonctionne pas. Après remplissage du bocal isotherme 316, le moyen d'isolement 317 est fermé et la pompe 213 arrêtée. Au démarrage du véhicule, la pompe 213 est actionnée et le moyen d'isolement 317 est ouvert de manière à vidanger le fluide contenu dans le bocal isotherme 316 dans la batterie 210. La voie 3 du moyen de raccordement 243 pourra être fermée pendant l'opération de vidange.

Comme précédemment, le bocal isotherme 316 peut être rempli avec le fluide sortant de l'élément 232 par une commande adéquate des moyens de raccordement 243 et 237, sans traverser le dispositif de refroidissement 240, éventuellement après l'arrêt du dispositif de refroidissement 214. A cet effet, la voie 2 du moyen de raccordement 243 peut être fermée, de même que la voie 3 du moyen de raccordement 237.

Quelque soit le mode de réalisation, le bocal isotherme sera par exemple conçu de manière à ce que la température du fluide qu'il contient perde environ 1°C par heure. Il pourra être équipé de moyens d'isolement, tels que des vannes ou électrovannes, pour le fermer après remplissage et conserver la chaleur du fluide qu'il contient lorsque le véhicule est à l'arrêt.

Le bocal isotherme sera dimensionné en fonction de la dimension de la batterie à refroidir, et de la place disponible dans le véhicule pour loger le bocal isotherme.

En outre, dans chaque mode décrit, on pourra prévoir de faire fonctionner le ou les thermoplongeurs lors de la charge de la batterie électrique, pour maintenir une certaine température dans la batterie et éventuellement remplir le bocal isotherme avec le fluide réchauffé par les thermoplongeurs. Dans ce cas, les thermoplongeurs seront disposés en amont du bocal isotherme, et l'on peut prévoir, lors du prochain arrêt du véhicule, de ne remplacer le liquide contenu dans le bocal que si la température du liquide du circuit de refroidissement/réchauffage est supérieure à la température du liquide contenu dans le bocal. A cet effet, le bocal isotherme peut être équipé d'un capteur de température pour mesurer la température du fluide qu'il contient, éventuellement relié au dispositif de commande.

Le fluide utilisé peut être un liquide, par exemple de l'eau.

## Revendications

1. Dispositif de stockage de chaleur pour réchauffer une batterie (10, 110, 210) d'un véhicule automobile à moteur électrique ou hybride, comprenant :
- une conduite (21, 121, 222) de circulation d'un fluide,
- un premier moyen de raccordement (22b, 122b, 222b) de la conduite (21, 121, 222) à la batterie,
- un deuxième moyen de raccordement (22a, 122a, 243) de la conduite (21, 121, 222) destiné à raccorder la conduite à la batterie (10, 110, 210) ou à un circuit de refroidissement (230) d'un élément (232) du véhicule émettant de la chaleur lors du roulage du véhicule et/ou du fonctionnement du moteur,
le dispositif étant **caractérisé en ce qu'**il comprend :
- un bocal isotherme (16, 116, 216, 316) raccordé à la conduite (21, 121, 222) de manière à être rempli par le fluide circulant dans la conduite (21, 121, 222), ledit fluide stockant en lui-même la chaleur dans le bocal, puis à évacuer ledit fluide vers l'intérieur de la batterie via le premier moyen de raccordement (22b, 122b, 222b).

2. Dispositif selon la revendication 1, **caractérisé en ce que** le bocal isotherme (16, 216) est monté en série sur la conduite (21, 222).

3. Dispositif selon la revendication 1, **caractérisé en ce que** le bocal isotherme (116, 316) est monté sur une ligne de dérivation (118, 218) de la conduite (121, 222) et **en ce qu'**au moins un moyen d'isolement (117, 317) est agencé pour isoler le bocal isotherme (116, 316) de la conduite (121, 222).

4. Dispositif selon l'une des revendications 1 à 3, **caractérisé en ce qu'**il comprend une pompe (13, 113, 213) pour la circulation du fluide à l'intérieur de la conduite (21, 121, 222).

5. Dispositif selon l'une des revendications 1 à 4, **caractérisé en ce qu'**il comprend un moyen de commande (50, 150, 250) de la pompe (13, 113, 213) et/ou des moyens de raccordement (22a, 22b; 122a, 122b; 243, 222b), par exemple des électrovannes ou raccords étanches, et/ou des moyens d'isolement (117, 317), par exemple des électrovannes.

6. Circuit de chauffage/refroidissement (20, 120, 220) d'une batterie (10, 110, 210), le circuit comprenant une entrée et une sortie aptes à être raccordées à une sortie (12, 112, 212) et une entrée (11, 111, 211) respectivement de la batterie (10, 110, 210), le circuit comprenant au moins un dispositif de refroidissement (14, 114, 214) et au moins une pompe (13, 113, 213), **caractérisé en ce qu'**il comprend un dispositif de stockage selon l'une des revendications 1 à 5, et **en ce que** le deuxième moyen de raccordement (22a, 122a, 243) de la conduite (21, 121, 222) dudit dispositif de stockage forme l'entrée dudit circuit et le premier moyen de raccordement (22b, 122b, 222b) de la conduite (21, 121, 222) dudit dispositif de stockage forme la sortie dudit circuit.

7. Véhicule automobile comprenant au moins une batterie (10, 110, 210) et un dispositif de stockage selon l'une des revendications 1 à 5, dans lequel le premier moyen de raccordement (22b, 122b, 222b) dudit dispositif de stockage est relié à la batterie.

8. Véhicule automobile selon la revendication 7, comprenant un circuit de refroidissement (230) d'un élément (232) du véhicule, dans lequel le deuxième moyen de raccordement (243) du dispositif de stockage est relié à une portion dudit circuit (230) située en aval dudit élément (232) de véhicule par rapport à la circulation du fluide dans le circuit (230).

9. Procédé de chauffage d'une batterie d'un véhicule à moteur électrique ou hybride au moyen d'un dispositif de stockage selon l'une des revendications 1 à 5, ledit procédé comprenant :
- lors de l'arrêt du moteur et/ou du véhicule, le remplissage du bocal isotherme (16, 116, 216, 316) par un fluide chaud issu de la batterie (10, 110, 210) ou d'un circuit de refroidissement (230) d'un élément (232) du véhicule émettant de la chaleur pendant le roulage du véhicule et/ou le fonctionnement du moteur,
- à l'arrêt ou au démarrage du moteur et/ou du véhicule, la vidange du fluide chaud contenu dans le bocal isotherme (16, 116, 216, 316) vers l'intérieur de la batterie.

10. Procédé de chauffage selon la revendication 9, dans lequel les étapes de remplissage et de vidange sont commandées par un dispositif de commande (50, 150, 250) en réponse à un signal représentatif de l'arrêt du moteur et/ou du véhicule pour l'étape de remplissage et en réponse à un signal représentatif de la mise en fonctionnement du moteur et/ou du roulage du véhicule pour l'étape de vidange.

## Patentansprüche

1. Wärmespeichernde Vorrichtung zum Erwärmen einer Batterie (10, 110, 210) eines Kraftfahrzeugs mit Elektro- oder Hybridmotor, umfassend:
- eine Fluidzirkulationsleitung (21, 121, 222),
- ein erstes Mittel zum Anschließen (22b, 122b, 222b) der Leitung (21, 121, 222) an die Batterie,
- ein zweites Mittel zum Anschließen (22a, 122a, 243) der Leitung (21, 121, 222), das dazu bestimmt ist, die Leitung an die Batterie (10, 110, 210) oder an einen Kühlkreislauf (230) eines Elements (232) des Fahrzeugs anzuschließen, das beim Fahren des Fahrzeugs und/oder beim Betrieb des Motors Wärme abgibt,
wobei die Vorrichtung **dadurch gekennzeichnet ist, dass** sie Folgendes aufweist:
- einen isothermischen Behälter (16, 116, 216, 316), der an die Leitung (21, 121, 222) angeschlossen ist, um durch das Fluid, das in der Leitung (21, 121, 222) zirkuliert, gefüllt zu werden, wobei das Fluid die Wärme in sich selbst in dem Behälter speichert, und dann das Fluid in Richtung des Inneren der Batterie über das erste Mittel zum Anschließen (22b, 122b, 222b) abzuleiten.

2. Vorrichtung nach Anspruch 1, **dadurch gekennzeichnet, dass** der isothermische Behälter (16, 216) in Reihe auf der Leitung (21, 222) befestigt ist.

3. Vorrichtung nach Anspruch 1, **dadurch gekennzeichnet, dass** der isothermische Behälter (116, 316) auf einer Umgehungsleitung (118, 218) der Leitung (121, 222) befestigt ist und dass mindestens ein Isoliermittel (117, 317) angeordnet ist, um den isothermischen Behälter (116, 316) von der Leitung (121, 222) zu isolieren.

4. Vorrichtung nach einem der Ansprüche 1 bis 3, **dadurch gekennzeichnet, dass** sie eine Pumpe (13, 113, 213) für die Zirkulation des Fluids im Inneren der Leitung (21, 121, 222) aufweist.

5. Vorrichtung nach einem der Ansprüche 1 bis 4, **dadurch gekennzeichnet, dass** sie ein Mittel zum Steuern (50, 150, 250) der Pumpe (13, 113, 213) und/oder Mittel zum Anschließen (22a, 22b; 122a, 122b; 243, 222b), beispielsweise der Elektroventile oder der dichten Anschlüsse, und/oder Mittel zum Isolieren (117, 317), beispielsweise der Elektroventile, aufweist.

6. Heiz-/Kühlkreislauf (20, 120, 220) einer Batterie (10, 110, 210), wobei der Kreislauf einen Eingang und einen Ausgang aufweist, die geeignet sind, jeweils an einen Ausgang (12, 112, 212) und einen Eingang (11, 111, 211) der Batterie (10, 110, 210) angeschlossen zu werden, wobei der Kreislauf mindestens eine Kühlvorrichtung (14, 114, 214) und mindestens eine Pumpe (13, 113, 213) aufweist, **dadurch gekennzeichnet, dass** er eine Speichervorrichtung nach einem der Ansprüche 1 bis 5 aufweist, und dadurch, dass das zweite Mittel zum Anschließen (22a, 122a, 243) der Leitung (21, 121, 222) der Speichervorrichtung den Eingang des Kreislaufs und das erste Mittel zum Anschließen (22b, 122b, 222b) der Leitung (21, 121, 222) der Speichervorrichtung den Ausgang des Kreislaufs bildet.

7. Kraftfahrzeug, umfassend mindestens eine Batterie (10, 110, 210) und eine Speichervorrichtung nach einem der Ansprüche 1 bis 5, wobei das erste Mittel zum Anschließen (22b, 122b, 222b) der Speichervorrichtung an die Batterie angeschlossen ist.

8. Kraftfahrzeug nach Anspruch 7, umfassend einen Kühlkreislauf (230) eines Elements (232) des Fahrzeugs, wobei das zweite Mittel zum Anschließen (243) der Speichervorrichtung an einem Abschnitt des Kreislaufs (230) angeschlossen ist, der dem Element (232) des Fahrzeugs gegenüber der Zirkulation des Fluids in dem Kreislauf (230) nachgelagert angeordnet ist.

9. Verfahren zum Erwärmen einer Batterie eines Fahrzeugs mit Elektro- oder Hybridmotor mittels einer Speichervorrichtung nach einem der Ansprüche 1 bis 5, wobei das Verfahren Folgendes aufweist:
- beim Abschalten des Motors und/oder des Fahrzeugs das Auffüllen des isothermischen Behälters (16, 116, 216, 316) durch ein heißes Fluid der Batterie (10, 110, 210) oder eines Kühlkreislaufs (230) eines Elements (232) des Fahrzeugs, das beim Fahren des Fahrzeugs und/oder beim Betrieb des Motors Wärme abgibt,
- beim Abschalten oder beim Starten des Motors und/oder des Fahrzeugs das Entleeren des heißen Fluids, das in dem isothermischen Behälter (16, 116, 216, 316) enthalten ist, in Richtung des Inneren der Batterie.

10. Verfahren zum Erwärmen nach Anspruch 9, wobei die Schritte des Auffüllens und des Entleerens durch eine Steuervorrichtung (50, 150, 250) als Antwort auf ein Signal, das für das Abschalten des Motors und/oder des Fahrzeugs repräsentativ ist, für den Schritt des Auffüllens und als Antwort auf ein Signal, das für das Ingangsetzen des Motors und/oder das Fahren des Fahrzeugs repräsentativ ist, für den Schritt des Entleerens gesteuert werden.

## Claims

1. Heat-storage device for heating a battery (10, 110, 210) of a motor vehicle having an electric or hybrid engine, comprising:
- a fluid-circulation pipe (21, 121, 222),
- a first means (22b, 122b, 222b) for connecting the pipe (21, 121, 222) to the battery,
- a second means (22a, 122a, 243) for connecting the pipe (21, 121, 222) that is intended to connect the pipe to the battery (10, 110, 210) or to a circuit (230) for cooling an element (232) of the vehicle that emits heat during the running of the vehicle and/or during the operation of the engine,
the device being **characterized in that** it comprises:
- an isothermal vessel (16, 116, 216, 316) connected to the pipe (21, 121, 222) so as to be filled by the fluid circulating in the pipe (21, 121, 222), said fluid in itself storing the heat in the vessel, and then to discharge said fluid towards the inside of the battery via the first connection means (22b, 122b, 222b) .

2. Device according to Claim 1, **characterized in that** the isothermal vessel (16, 216) is mounted in series on the pipe (21, 222).

3. Device according to Claim 1, **characterized in that** the isothermal vessel (116, 316) is mounted on a bypass line (118, 218) of the pipe (121, 222), and **in that** at least one isolating means (117, 317) is arranged to isolate the isothermal vessel (116, 316) from the pipe (121, 222).

4. Device according to one of Claims 1 to 3, **characterized in that** it comprises a pump (13, 113, 213) for the circulation of the fluid inside the pipe (21, 121, 222).

5. Device according to one of Claims 1 to 4, **characterized in that** it comprises a means (50, 150, 250) for controlling the pump (13, 113, 213) and/or connection means (22a, 22b; 122a, 122b; 243, 222b), for example electrically operated valves or leaktight couplings, and/or isolating means (117, 317), for example electrically operated valves.

6. Circuit (20, 120, 220) for heating/cooling a battery (10, 110, 210), the circuit comprising an input and an output which are able to be connected to an output (12, 112, 212) and an input (11, 111, 211) of the battery (10, 110, 210) respectively, the circuit comprising at least one cooling device (14, 114, 214) and at least one pump (13, 113, 213), **characterized in that** it comprises a storage device according to one of Claims 1 to 5, and **in that** the second means (22a, 122a, 243) for connecting the pipe (21, 121, 222) of said storage device forms the input of said circuit and the first means (22b, 122b, 222b) for connecting the pipe (21, 121, 222) of said storage device forms the output of said circuit.

7. Motor vehicle comprising at least one battery (10, 110, 210) and a storage device according to one of Claims 1 to 5, in which the first connecting means (22b, 122b, 222b) of said storage device is connected to the battery.

8. Motor vehicle according to Claim 7, comprising a circuit (230) for cooling an element (232) of the vehicle, in which the second connecting means (243) of the storage device is connected to a portion of said circuit (230) situated downstream of said vehicle element (232) with respect to the circulation of the fluid in the circuit (230).

9. Method for heating a battery of a vehicle having an electric or hybrid engine by means of a storage device according to one of Claims 1 to 5, said method comprising:
- during stopping of the engine and/or of the vehicle, filling the isothermal vessel (16, 116, 216, 316) with a hot fluid from the battery (10, 110, 210) or from a circuit (230) for cooling an element (232) of the vehicle that emits heat during the running of the vehicle and/or during the operation of the engine,
- during stopping or starting of the engine and/or of the vehicle, emptying the hot fluid contained in the isothermal vessel (16, 116, 216, 316) towards the inside of the battery.

10. Heating method according to Claim 9, in which the filling and emptying steps are controlled by a control device (50, 150, 250) in response to a signal representative of the stopping of the engine and/or of the vehicle for the filling step and in response to a signal representative of the start-up of the engine and/or of the running of the vehicle for the emptying step.
